(19) Europäisches Patentamt
European Patent Office
Office européen des brevets

(11) Numéro de publication: **0 243 279**
**A1**

(12) # DEMANDE DE BREVET EUROPEEN

(21) Numéro de dépôt: **87420051.2**

(22) Date de dépôt: **23.02.87**

(51) Int. Cl.⁴: **C 08 K 9/04**

(30) Priorité: **07.03.86 FR 8603464**

(43) Date de publication de la demande:
**28.10.87 Bulletin 87/44**

(84) Etats contractants désignés:
**AT BE CH DE ES GB GR IT LI LU NL SE**

(71) Demandeur: **VULNAX INTERNATIONAL LIMITED**
**Immeube "Le Directoire" 321, bureaux de la Colline**
**F-92213 Saint-Cloud Cédex (FR)**

(72) Inventeur: **Feder, Michel**
**35, rue du Séminaire**
**F-68720 Mulhouse (FR)**

**Leleu, Etienne**
**71, boulevard Arago**
**F-75013 Paris (FR)**

**Papirer, Eugène**
**14, rue de la Paix**
**F-68120 Pfastatt (FR)**

**Vidal, Alain**
**7, rue de Bourgogne**
**F-68760 Willer Sur Tur (FR)**

(74) Mandataire: **Vignally, Noel et al**
**RHONE-POULENC INTERSERVICES Service Brevets**
**Chimie Centre de Recherches de Saint-Fons B.P. 62**
**F-69192 Saint-Fons Cedex (FR)**

(54) **Procédé de stabilisation de polymères, nouveaux stabilisants utilisés à cet effet et nouvelles compositions polymèriques stabilisées.**

(57) Procédé de stabilisation de polymères à l'aide de stabilisants résistant à l'élimination et/ou à la migration, caractérisé en ce qu'on incorpore auxdits polymères une quantité efficace d'un stabilisant lié chimiquement à une charge siliceuse par l'intermédiaire d'un reste =Si-O-.

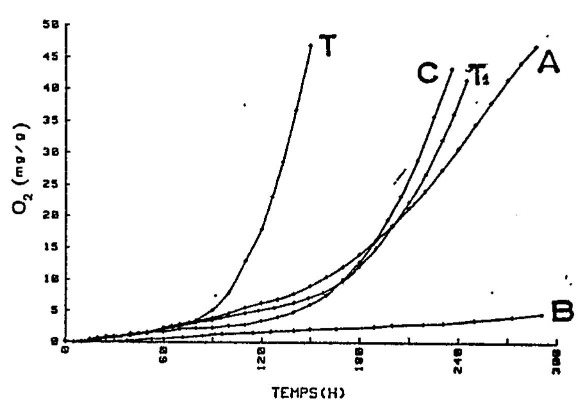


EP 0 243 279 A1

Bundesdruckerei Berlin

## Description

PROCEDE DE STABILISATION DE POLYMERES, NOUVEAUX STABILISANTS UTILISES A CET EFFET ET NOUVELLES COMPOSITIONS POLYMERIQUES STABILISEES

La présente invention concerne un nouveau procédé pour améliorer la résistance à la dégradation des polymères par l'accroîssement de la durée de présence des agents stabilisants utilisés à cet effet et les polymères stabilisés ainsi obtenus.

On sait que les polymères, et en particulier ceux comportant des doubles liaisons éthylèniques dans leur structure, subissent des dégradations dues à l'action de facteurs extrêmement divers de leur environnement tels que la lumière, la chaleur, les agents oxydants atmosphériques (oxygène, ozone). Ces dégradations se traduisent par la rupture des chaînes polymériques et, par conséquent, par l'affaiblissement, voire la perte, des propriétés mécaniques souvent accompagnée du développement de colorations indésirables. Pour éviter ou au moins retarder ce phénomène de vieillissement on incorpore aux polymères des adjuvants dénommés stabilisants susceptibles de limiter ou d'inhiber l'action néfaste des diverses causes de la dégradation. Ces stabilisants sont par exemple des anti-UV, des agents anti-chaleur, des antioxydants, des agents antiozone. Pour les besoins de l'industrie on a mis au point une quantité considérable de tels agents qui présentent une remarquable efficacité pour la protection des polymères. En dépit de celle-ci la plus grande partie des stabilisants industriels souffre d'un inconvénient majeur qui résulte de la perte de leur activité stabilisante au cours du temps. Les recherches consacrées à ce phénomène ont montré qu'il est dû pour une large part à l'élimination ou la perte du stabilisant au cours des opérations de transformation et/ou dans les conditions d'utilisation des polymères stabilisés (cf. G. SCOTT Gummi Asbest, Kunststoffe 31 page 934 et suivantes [1978] ; W.L. HAWKINS et al, J. Appl. Polym. Sci. 3 (9) pages 277-281 [1960]). Cette perte peut trouver son origine dans l'évaporation du stabilisant sous l'influence des températures auxquelles sont portés les polymères au cours des opérations de transformation ou dans les conditions d'utilisation. Elle peut également avoir pour cause l'extraction progressive du stabilisant par des solvants organiques et/ou par l'eau avec lesquels les polymères peuvent être mis en contact lors de leur transformation et/ou de l'utilisation des objets finis.

Pour assurer une stabilisation optimale des polymères, il convient de tenir compte de cette perte du stabilisant par évaporation et/ou extraction ; cela conduit à augmenter la quantité de stabilisant mise en oeuvre au delà de la quantité qui serait suffisante si cette perte ne se produisait pas.

Un autre inconvénient des stabilisants usuels réside dans leur aptitude à migrer du polymère stabilisé dans des matériaux divers en contact avec ledit polymère. Cet inconvénient se révèle particulièrement gênant lorsque la migration concerne un stabilisant coloré d'un polymère foncé en contact avec des matériaux de couleur claire (surface métallique peinte, polymères clairs) ; il se produit alors l'apparition de colorations indésirables dans les surfaces claires, en particulier au voisinage des zones de contact du polymère stabilisé avec le matériau de teinte claire. Ce phénomène de migration se manifeste tout particulièrement lors de l'utilisation d'élastomères caoutchouteux de coloration foncée contenant des stabilisants colorés, en contact avec d'autres élastomères de couleur claire ou des surfaces métalliques peintes.

Les problèmes posés par la perte des stabilisants et/ou leur migration ont fait l'objet de nombreuses recherches et diverses solutions ont été proposées. Par exemple pour tenter de résoudre le problème posé par l'évaporation des stabilisants sous l'action de la chaleur on a proposé de recourir à l'emploi de stabilisants à haut poids moléculaire, présentant de faibles tensions de vapeur. Une telle solution a pour inconvénient essentiel qu'elle n'est pas d'un emploi général. De plus elle ne résoud pas le problème de l'emploi de stabilisants plus volatils mais pleinement satisfaisants du point de vue de leur efficacité stabilisante. Par ailleurs les phénomènes d'extraction et/ou de migration ne sont pas maîtrisés de cette façon. On a proposé encore pour éviter l'élimination et/ou la migration du stabilisant de le lier chimiquement au polymère (cf. G. SCOTT Gummi, Asbest, Kunststoffe 31 page 934 et suivantes [1978] ; brevet français 1.577.770 par exemple). Ce greffage du stabilisant sur les chaînes du polymère est réalisé par l'intermédiaire de groupes réagissant avec des sites compatibles du polymère et en particulier les doubles liaisons carbone-carbone. En dépit de son intérêt le greffage du stabilisant sur le polymère n'est pas pleinement satisfaisant. Ainsi la présence de la molécule de stabilisant sur les chaînes de polymère peut entraîner la modification de certaines de ses propriétés physiques, mécaniques et/ou chimiques de façon défavorable ; par ailleurs la quantité de stabilisant peut être difficilement adaptée à la nécessité d'une stabilisation convenable car la quantité présente dans le polymère est dépendante du taux de greffage du stabilisant qui est lui-même lié à la réactivité des groupes antagonistes du polymère et du stabilisant. Enfin le greffage ne peut être considéré comme un moyen général de stabilisation des polymères, chaque stabilisant devant être choisi en fonction des groupes fonctionnels qu'il comporte susceptibles de réagir avec les sites réactifs du polymère à stabiliser.

Dès lors il s'avère que le problème posé par l'élimination et/ou la migration des stabilisants des polymères n'a pas encore reçu de solution pleinement satisfaisante du point de vue industriel. La présente invention se propose précisément de résoudre ce problème.

Un premier objet de la présente invention réside dans un procédé de stabilisation de polymères permettant d'éviter l'élimination et/ou la migration du stabilisant dans les conditions de transformation, de mise en oeuvre et/ou d'utilisation des polymères.

Un deuxième objet de la présente invention réside dans de nouveaux stabilisants des polymères qui ne sont

pas éliminés et/ou qui ne migrent pas dans les conditions de transformation et/ou de mise en oeuvre et/ou d'utilisation des polymères.

Un troisième objet de la présente invention réside dans un procédé de préparation des stabilisants selon l'invention, dénommés ci-après par raison de commodité "stabilisants permanents".

Un quatrième objet de la présente invention réside dans les polymères stabilisés obtenus par incorporation aux polymères des stabilisants permanents conformes à l'invention.

Plus spécifiquement la présente invention a pour objet un procédé de stabilisation de polymères à l'aide de stabilisants résistant à l'élimination et/ou à la migration, caractérisé en ce qu'on incorpore auxdits polymères une quantité efficace d'un stabilisant lié chimiquement à une charge siliceuse par l'intermédiaire d'un reste =Si-O-.

Par l'expression "charge siliceuse" on désigne au titre de la présente invention, tout matériau solide minéral particulaire comportant une pluralité de groupes $-SiO_2-$ et de restes =SiO-, utilisé comme charge des polymères. Des exemples de matériau siliceux seront donnés par la suite.

Par le terme "stabilisant" on désigne au titre de la présente invention, tout composé organique permettant de protéger les polymères contre les dégradations qu'ils subissent au cours de leur transformation et/ou leur mise en oeuvre et/ou leur utilisation, en particulier sous l'action de la lumière, de la chaleur et des agents oxydants notamment ceux de l'atmosphère.

Plus spécifiquement encore la présente invention a pour objet un procédé de stabilisation des polymères caractérisé en ce qu'on leur incorpore une quantité efficace d'une charge siliceuse comportant à sa surface une pluralité de restes stabilisants de formule générale :

$\equiv Si - O - X - [A - Y]_n - Z$ (I)

dans laquelle :

- X représente un lien valentiel ou un reste fonctionnel ;
- Y représente un reste fonctionnel identique ou différent de X ;
- A représente un reste hydrocarboné divalent ;
- Z représente un reste d'un composé organique stabilisant ;
- n est 0 ou 1.

Plus préférentiellement dans la formule (I) :

. X représente un lien valentiel ou les restes

$-\overset{O}{\overset{\|}{C}}-$ ; $-\overset{O}{\overset{\|}{C}}-NH-$ ; $-\overset{S}{\overset{\|}{C}}-NH$ ; -Si(R'R")- dans lequel R' et R", identiques ou différents représentent un radical alkyle inférieur (de préférence méthyle ou éthyle) ou un radical aryle (phényle), alkylaryle (toluyle), arylalkyle (benzyle), cycloalkyle (cyclohexyle).

. Y représente un reste fonctionnel de l'ensemble formé par :

-O- ; -COO- ; -CO-NH- ; -NH-COO- ; -NH-CSO- ; -CO- ; -S- ; -NH-.

. A représente :

- un reste alkylène ayant de 1 à 30 atomes de carbone, linéaire ou ramifié, tel que les restes méthylène, éthylène, propylène-1,3, hexaméthylène, décaméthylène, éthyl-2 hexylène-1,6, hexadécaméthylène ;
- un reste cycloalkylène ayant de 5 à 12 atomes de carbone (cyclohexylène) éventuellement substitué par des radicaux alkyles inférieurs ;
- un reste arylène éventuellement substitué par des radicaux alkyles inférieurs : o-, m- ou p-phénylènes ; toluylènes ; xylylènes ;
- un reste hydrocarboné divalent constitué par une combinaison d'un ou plusieurs radicaux alkylènes tels que ceux précédemment définis avec un ou plusieurs radicaux cycloalkylènes et/ou arylènes tels que précédemment définis, ce reste hydrocarboné divalent comportant de 6 à 40 atomes de carbone et de préférence de 6 à 15 atomes de carbone, tels que les restes :

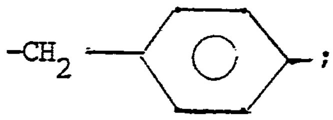 ; 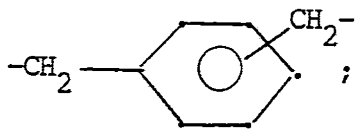 ; 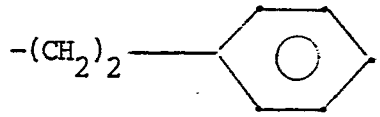 ;

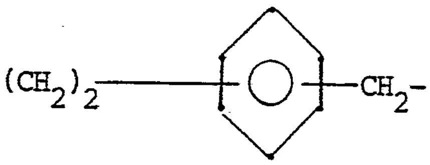

. Z représente le reste d'une molécule d'un antioxydant phénolique ou aminoaromatique.

Plus préférentiellement encore dans la formule (I) :

. X représente un lien valentiel, un reste -Si(R'R")- ; un reste fonctionnel -NH-CO- ;

. A représente un reste arylène ou une combinaison d'un ou plusieurs restes méthylènes avec un ou plusieurs restes arylènes ;

. Y représente un reste fonctionnel -O- ; -COO- ; -NH- ; -NH-COO- ; -CO-NH- .

. Z représente des restes antioxydants de formule générale :

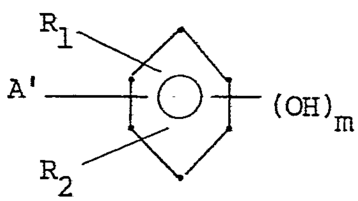 (II)

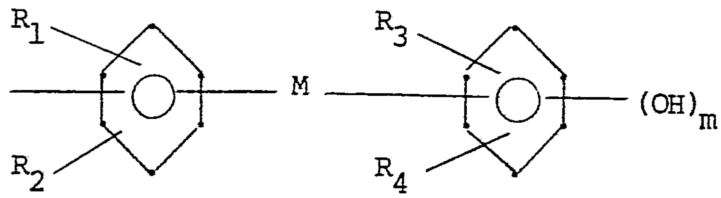 (III)

dans lesquelles :

- $R_1$, $R_2$, $R_3$, $R_4$, identiques ou différents représentent des atomes d'hydrogène ou des radicaux alkyles linéaires ou ramifiés ayant de 1 à 10 atomes de carbone, et de préférence des radicaux alkyles ramifiés ayant de 1 à 5 atomes de carbone ;
- A' représente un lien valentiel ou un radical alkylène ayant de 1 à 10 atomes de carbone et de préférence de 1 à 2 atomes de carbone.
- M représente un lien valentiel ou un reste alkylène inférieur (méthylène, éthylène, éthylidène, propylidène), un atome d'oxygène, de soufre ; un reste -NH-, -CO-, $-SO_2-$ ;
- m est 0, 1 ou 2 mais au moins égal à 1 lorsque M ne représente pas un reste -NH-.

Un deuxième objet de la présente invention réside dans les produits industriels nouveaux que constituent des charges siliceuses auxquelles est lié chimiquement un stabilisant par l'intermédiaire d'un reste =SiO-.

Plus spécifiquement un deuxième objet de l'invention réside dans les produits industriels nouveaux que représente une charge stabilisante caractérisée en ce qu'elle est constituée d'un support siliceux particulaire comportant à sa surface une pluralité de groupes de formule générale :

$\equiv Si-O-X-[A-Y]_n-Z$ (I)

dans laquelle X, A, Y, n et Z ont les significations déjà données.

Plus spécifiquement encore la présente invention a pour objet une charge stabilisante pour polymères caractérisée en ce qu'elle est constituée d'un support siliceux particulaire comportant à sa surface une pluralité de groupes de formule générale :

$\equiv Si-O-X-[A-Y]_n Z$ (I)

dans laquelle :

- X représente un lien valentiel, un reste -Si(R'R"), un reste fonctionnel -NH-CO- ;
- A représente un reste arylène ou une combinaison d'un ou plusieurs restes méthylènes avec un ou plusieurs restes arylènes.
- Y représente un reste fonctionnel -O- ; -COO- ; -NH- ; -NH-COO- ; -CONH- ;

- n est 0 ou 1 ;
- Z représente des restes antioxydants de formule générale :

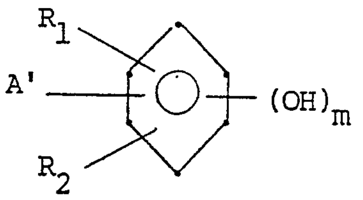

(II)

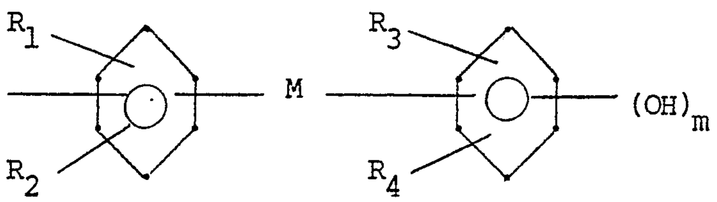

(III)

R', R", A', $R_1$, $R_2$, $R_3$, $R_4$ et m ayant la signification donnée précédemment avec la restriction que dans la formule (II) l'un au moins des radicaux $R_1$, $R_2$ représente un radical alkyle lorsque dans la formule (I) X représente un lien valentiel et n est zéro.

Dans les charges siliceuses stabilisantes conformes à l'invention les restes stabilisants sont liés aux restes =SiO- de la structure siliceuse, soit directement (cas où n est égal à zéro), soit par l'intermédiaire d'un agent de couplage (cas où n est égal à 1). En raison de la liaison chimique entre la molécule stabilisante et la charge le problème posé par l'élimination et/ou la migration du stabilisant se trouve résolu.

Les charges stabilisantes selon la présente invention sont obtenues en mettant en réaction tout ou partie des groupes silanols portés par une charge siliceuse soit directement avec un stabilisant comportant au moins un groupe fonctionnel capable de réagir avec les groupes silanols, soit avec un agent de couplage comportant au moins un groupe fonctionnel susceptible de réagir avec les groupes silanols et au moins un autre groupe fonctionnel susceptible de réagir avec un groupe fonctionnel du stabilisant.

Pour l'obtention des charges stabilisantes selon l'invention, on peut faire appel à tout matériau siliceux particulaire (c'est-à-dire possédant dans sa structure une pluralité de groupes $-(-SiO_2-)-$ et comportant une pluralité de groupes silanols. De tels matériaux ont été décrits dans l'ouvrage de R.K. ILER "The Chemistry of Silica" (1979) publié par JOHN WILEY and SONS. On peut recourir à des matériaux siliceux naturels tels que les silicates : terre de diatomées, quartz, amiante chrysotyle, amosite, argiles (attapulgite, kaolinite, bentonites, montmorillonite) ou à de la silice pure sous les diverses formes dans lesquelles elle est utilisée comme charge. Lorsqu'on fait appel à un matériau siliceux naturel on peut lui faire subir préalablement au greffage du stabilisant ou de l'agent de couplage les traitements usuels destinés à augmenter le nombre des groupes silanols disponibles (par exemple traitement par un acide fort). On peut également recourir à un matériau siliceux composite constitué par des particules d'un matériau minéral, notamment un matériau siliceux naturel tel qu'un silicate comportant un revêtement de silice. Lorsque, selon une variante préférée de l'invention, on a recours à de la silice, on utilise de préférence une silice de précipitation plus riche en groupes silanols. Quelle que soit la nature du matériau siliceux retenu on fait appel de préférence à des charges ayant une surface spécifique déterminée selon la méthode BET au moins égale à 25 m2/g et qui peut atteindre 900 m2/g. Des surfaces spécifiques comprises entre 100 et 600 m2/g conviennent bien. La charge siliceuse est constituée de particules poreuses ou non bien que les masses poreuses soient préférées. La dimension particulaire peut varier dans de larges limites et dépend dans une certaine mesure de la porosité du matériau. Il est préférable que la dimension particulaire soit d'autant plus faible que le matériau est moins poreux. En général des matériaux siliceux de dimension particulaire moyenne comprise entre 15 nm et 50 nm conviennent bien. Des matériaux siliceux particulièrement bien adaptés pour préparer les charges stabilisantes selon l'invention ont été décrits dans le brevet américain No. 2.657.149 auquel on peut se référer.

La teneur en groupes silanols des matériaux siliceux utilisés pour la préparation des charges stabilisantes selon l'invention, exprimée en nombre de groupes =Si-OH par nm2 peut varier dans de larges limites selon la nature du matériau siliceux. On fait appel de préférence à des matériaux comportant au moins 0,5 groupe =Si-OH par nm2 et plus préférentiellement encore au moins un groupe =Si-OH/nm2. Il n'y a pas de limite supérieure critique du nombre de groupes =Si-OH qui peut atteindre la valeur maximale théorique (cf. ISLER, loc. cit., page 636) mais sans avantage particulier.

Lorsque pour la préparation des charges stabilisantes selon l'invention on utilise un agent de couplage, on fait appel à des composés organiques de formule générale :

X' - A - Y' (IV)

dans laquelle :

. A a la signification donnée plus haut ;

. X' représente un groupe fonctionnel susceptible de réagir avec les groupes silanols du matériau siliceux ;

. Y′ représente un groupe fonctionnel susceptible de réagir avec un groupe fonctionnel antagoniste du stabilisant.

Dans la formule (IV) X′ et Y′ peuvent être identiques ou différents. X′ représente plus particulièrement des groupes hydroxyle, isocyanate, isothiocyanate, halogénocarbonyle, halogénosilyle, alkoxycarbonyle inférieur, alkylcarbonyloxy inférieur, hydroxycarbonyle, un atome d'halogène. Y′ représente des groupes fonctionnels tels que ceux cités pour X′ ou un groupe amine primaire.

De préférence X′ représente un groupe hydroxyle, un groupe halogénosilyle, un groupe isocyanate et Y′ un groupe hydroxyle, un atome d'halogène, un groupe aminoprimaire, un groupe isocyanate.

Comme exemples spécifiques d'agent de couplage de formule (IV), on peut citer à titre non limitatif : l'hydroquinone, le p-aminophénol, l'acide p-hydroxybenzoïque, l'acide p-aminobenzoïque, le chlorure de p-aminobenzoyle, l'éthylèneglycol, l'alcool p-hydroxybenzylique, l'alcool p-hydroxyphényl-2 éthylique, l'hexaméthylènediisocyanate, le toluènediisocyanate, le (chlorométhyl-4 phényl)-2 éthyldiméthyl-chlorosilane, le chloro-3 propanol-1, la résorcine, le chlorure de p-hydroxybenzoyle, le dichlorure de téréphtaloyle.

Les stabilisants utilisés pour préparer les charges stabilisantes selon la présente invention peuvent être représentés plus particulièrement par la formule générale :

Z - Y″ (V)

dans laquelle Z a la définition donnée pour la fomule (I) et Y″ représente un groupe fonctionnel X′ lorsque n est égal à 0 dans la formule (I), X′ ayant la définition déjà donnée ci-avant, ou un groupe fonctionnel Y‴ susceptible de réagir avec le groupe fonctionnel Y′ de l'agent de couplage quand n est égal à 1 dans la formule (I). Comme exemple de groupe fonctionnel Y‴ on peut citer les groupes hydroxyle, amine, hydroxycarbonyle, alkoxycarbonyle inférieur, alkylcarbonyloxy inférieur, isocyanate, isothiocyanate, halogénocarbonyle (bromo-, chlorocarbonyle), mercaptan, les atomes d'halogène (chlore ou brome notamment). De préférence Y‴ représente un groupe hydroxyle ou un groupe amino. Dans tous les cas Y″ peut représenter un groupe fonctionnel identique ou différent du ou des autres groupes fonctionnels présents sur le reste Z et qui confèrent son caractère stabilisant au composé de formule (V) ; dans le premier cas ce dernier comporte au moins un groupe fonctionnel stabilisant supplémentaire.

Les stabilisants utilisés pour préparer les charges stabilisantes selon l'invention sont de préférence des antioxydants répondant à la formule générale (V) dans laquelle Z représente des restes antioxydants de formule générale (II) ou (III), c'est-à-dire des antioxydants de formules générales :

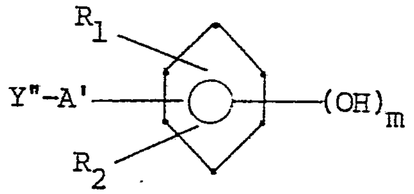

(V)

ou

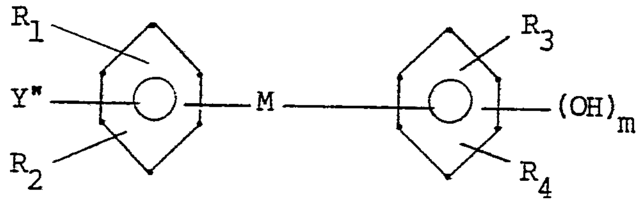

(VII)

dans lesquelles Y″, A′, $R_1$, $R_2$, $R_3$, $R_4$, M, m ont les significations données auparavant.

Comme exemples illustratifs de stabilisants de formule (V) on peut citer : la di-t-butylhydroquinone, l'hydroquinone, le bis-(hydroxy-2 t-butyl-3 phényl)-méthane, le bis-(hydroxy-2 t-butyl-3 méthyl-5 phényl)méthane, le sulfure de di-(hydroxy-2 t-butyl-3 phényle), le dihydroxy-4,4′ tétra-t-butyl-3,3′,5,5′ diphényle, le di-t-butyle-2,6 aminométhyl-4 phénol, le di-t-butyl-2,6-chlorométhyl-4 phénol, le di-t-butyl-2,6 hydroxyméthyl-4 phénol, la N-phényl p-phénylènediamine (para-aminodiphénylamine), le di-t-butyl-2,6 mercapto-4 phénol, le di-t-butyl-3,5 hydroxy-4 benzoate de méthyle. Des stabilisants polyfonctionnels tels que l'hydroquinone peuvent jouer le rôle d'agent de couplage.

Comme exemples spécifiques de nouvelles charges stabilisantes selon la présente invention on peut citer à titre non limitatif un matériau siliceux comportant une pluralité de restes de formules :

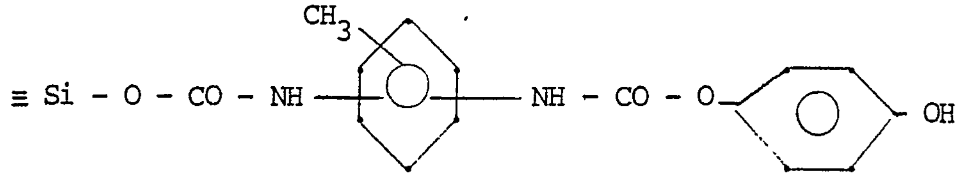

ou

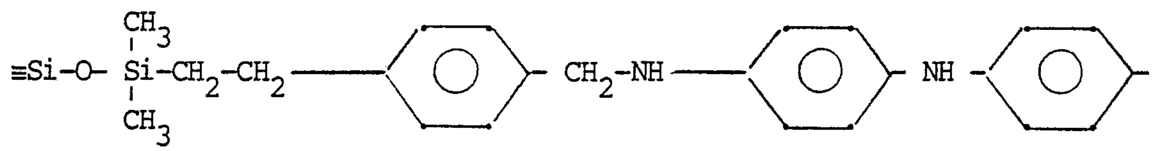

ou

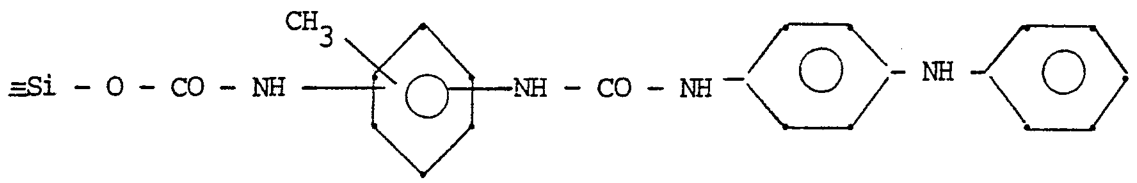

La préparation des charges stabilisantes selon la présente invention met en oeuvre les réactions usuelles classiques bien connues du chimiste entre les groupes silanols du matériau siliceux et les restes fonctionnels de la molécule de stabilisant ou de l'agent de couplage. Ainsi pour les réactions des groupes silanols avec des composés hydroxylés on peut opérer selon les procédés décrits dans les brevets américains No. 2.739.075 ; 2.757.098 ; 2.739.074 ; 2.736.669 ; 2.657.149. On peut également faire appel au procédé décrit dans le brevet américain No. 3.208.867 lorsqu'il s'agit de la réaction d'un agent de couplage à groupes isocyanates avec les groupes silanols d'un matériau siliceux. Lorsqu'on fait appel à un agent de couplage pour assurer la liaison chimique entre le stabilisant et le matériau siliceux on peut, sans sortir du cadre de l'invention, soit faire réagir d'abord l'agent de couplage avec les groupes silanols puis le matériau greffé ainsi obtenu avec le stabilisant, soit faire réagir l'agent de couplage avec le stabilisant puis le complexe agent de couplage/stabilisant avec les restes silanols du matériau siliceux. Il est préférable de conduire ces diverses réactions dans un solvant inerte vis-à-vis du matériau siliceux, du stabilisant et éventuellement de l'agent de couplage. A cet égard on fait appel de préférence à des hydrocarbures aliphatiques, cycloaliphatiques, aromatiques éventuellement halogénés (hexane, cyclohexane, toluène, chlorobenzène) à de l'éther de pétrole ou à la ligroïne. On peut également faire appel à un excès de stabilisant et/ou d'agent de couplage quand ces derniers sont liquides dans les conditions de la réaction. Lorsque la réaction du support siliceux avec l'agent de couplage et/ou le stabilisant est terminée le produit solide est filtré et lavé abondamment avec un solvant de l'agent de couplage et/ou du stabilisant pour éliminer le composé organique adsorbé à la surface du matériau support et non fixé chimiquement. Le nombre de motifs de formule générale :

$\equiv Si - O - X - (A - Y)_n - Z$ (I)

présents sur le support siliceux dépend dans une large mesure du nombre de groupes silanols par gramme ou par nm2 de surface du matériau siliceux de départ, de la nature des composés organiques mis en oeuvre et de la quantité d'agent de couplage et/ou de stabilisant mise en oeuvre. Cette dernière, exprimée en équivalent d'agent de couplage ou en mole de stabilisant par groupe silanol peut varier dans de larges limites. On peut recourir à de 0,1 à 10 équivalents ou moles de composé organique par mole de silanol. Des quantités supérieures pourraient être mises en oeuvre sans sortir du cadre de l'invention. En général on fait appel à de 0,5 à 5 équivalents ou moles de composé organique par mole de silanol. En pratique, il est préférable que le nombre de restes stabilisants de formule (I) corresponde à au moins 5 % ou plus préférentiellement à au moins 10 % du nombre des groupes $\equiv$Si-OH présents initialement. Il n'y a évidemment pas de valeur supérieure critique de ce rapport.

La température de la réaction dépend de la nature du ou des composés organiques. Elle peut être comprise entre 0 et 200° C. Une température comprise entre 20 et 150° C convient en général bien. La réaction peut être conduite à pression normale ou sous pression plus élevée.

La durée de la réaction n'est pas critique. Elle dépend des conditions de la réaction, de la nature des composés organiques, c'est-à-dire de leur vitesse de réaction avec les groupes silanols et du taux de greffage du stabilisant que l'on désire atteindre.

D'un point de vue pratique, la réaction est simple à conduire. Il suffit en effet de mettre en suspension le matériau siliceux dans un solvant inerte, de porter la suspension à la température convenable puis d'ajouter l'agent de couplage ou le stabilisant tandis que l'on maintient la suspension sous agitation. Ces conditions

sont maintenues pendant une durée suffisante pour atteindre le taux de greffage désiré. On opère de la même façon lorsque l'agent de couplage ou le stabilisant sont utilisés comme milieu réactionnel. Lorsqu'on fait réagir le matériau siliceux d'abord avec un agent de couplage, il est préférable d'isoler le matériau greffé obtenu, puis d'éliminer l'agent de couplage non fixé avant de procéder à la réaction avec le stabilisant.

Les charges stabilisantes selon l'invention peuvent être utilisées pour la stabilisation de tous matériaux polymères sensibles à l'action de la chaleur et/ou des agents oxydants et qui peuvent être chargés à l'aide de matériaux siliceux. On peut citer à titre non limitatif les polyoléfines (polyéthylène, polypropylène), le polychlorure de vinyle, le polystyrène, les silicones, les caoutchoucs naturels et synthétiques. Les charges stabilisantes selon l'invention conviennent tout spécialement bien à la stabilisation vis-à-vis de l'action de la chaleur et/ou des agents oxydant des caoutchoucs naturels ou synthétiques tels que le polybutadiène, le polyisoprène, les copolymères isobutylène/isoprène, styrène/butadiène, acrylonitrile/butadiène, acrylonitrile/butadiène/styrène, le polychloroprène.

La quantité de charge siliceuse stabilisante utilisée pour stabiliser les polymères varie selon la nature de ces derniers, la nature du stabilisant greffé et le taux de greffage. En général cette quantité est calculée pour introduire dans le polymère une quantité de stabilisant équivalente à celle du stabilisant libre. Elle est de préférence choisie pour introduire de 0,1 à 10 % en poids de stabilisant par rapport au polymère et plus préférentiellement de 0,5 à 5 % en poids de stabilisant considéré indépendamment de la charge.

On peut naturellement introduire dans les polymères stabilisés conformément à la présente invention les additifs usuels tels que des pigments, des agents de vulcanisation, des retardateurs de vulcanisation. Si la quantité de charge apportée par la charge stabilisante est insuffisante pour conférer au polymère stabilisé les propriétés physiques ou mécaniques recherchées on peut ajouter une quantité complémentaire d'une charge qui peut être de même nature ou d'une nature différente de celle utilisée comme support dans la charge stabilisante. Ainsi on peut introduire dans le polymère une quantité supplementaire de silice ou d'un matériau siliceux.

Pour la stabilisation des polymères conformément à l'invention les charges stabilisantes sont introduites selon les techniques utilisées habituellement pour l'incorporation des charges. Dans le cas de polymères thermoplastiques la charge stabilisante peut être introduite au même titre que les autres additifs dans les appareils usuels de mélangeage et/ou de transformation du polymère (extrudeuse par exemple). Dans le cas des caoutchoucs la charge stabilisante est en général introduite à ces derniers en même temps que les adjuvants habituels (accélérateurs de vulcanisation, agents anti-grillage, pigments, etc...) avant vulcanisation par malaxage dans les appareils usuels.

La présente invention concerne encore, à titre de produits industriels nouveaux, les compositions polymériques stabilisées contenant une quantité efficace d'une charge siliceuse stabilisante conforme à la présente invention.

Les exemples qui suivent illustrent l'invention et montrent comment elle peut être mise en pratique.

EXEMPLE 1

Dans un bécher en verre de 500 cm3, équipé d'un système d'agitation magnétique, on charge 230 cm3 d'une solution acétonique d'hydroquinone à 0,545 mole par litre (soit 0,125 mole). On introduit ensuite sous agitation en 15 mn 30 g de silice vendue sous la marque commerciale ZEOSIL 175 MP par la Société RHONE-POULENC. Cette silice présente les caractéristiques suivantes :

. surface spécifique BET : 175 m2/g
. teneur en groupes silanols : 4,5 /nm2
. volume poreux : 2,8 cm3/g
. diamètre moyen des particules : 14 nm.

La quantité de silice chargée correspond à environ 0,04 équivalent molaire de groupe silanol.

Après addition de la silice l'acétone est chassée par distillation sous vide. Le résidu obtenu est alors porté à 150°C pendant 15 h par chauffage au bain d'huile après quoi on le refroidit à 20°C. On récupère un solide gris-clair pulvérulent que l'on soumet à une extraction à l'acétone dans un soxhlet pour éliminer l'hydroquinone non fixée chimiquement. Pendant la durée de cette extraction la teneur en carbone d'échantillons est déterminée après élimination de l'acétone par extraction par le n-pentane. L'extraction est poursuivie jusqu'à ce que la teneur en carbone du résidu demeure constante. Le solide est alors soumis à une extraction par le n-pentane pendant 5 heures pour éliminer toute trace d'acétone. La silice ainsi traitée est séchée sous vide jusqu'à poids constant. La teneur en carbone du produit ainsi obtenu s'élève à 4,7 % en poids. Pour tenir compte de l'incidence des solvants sur la teneur en carbone de la silice, on a appliqué le même traitement à la silice mais en absence d'hydroquinone ; dans ce cas la teneur en carbone de la silice traitée s'élève à 0,2 % en poids. L'hydroquinone greffée sur la silice intervient dans la teneur en carbone jusqu'à concurrence de 4,5 % en poids ce qui correspond à 1,6 molécule d'hydroquinone greffée par $nm^2$. La teneur pondérale en hydroquinone de la silice greffée obtenue s'élève à 6,8 %. La silice greffée est soumise à une analyse en spectrométrie IR qui fait apparaître la présence d'une bande intense à 1520 $cm^{-1}$ correspondant aux liaisons carbone-carbone aromatiques.

Ces analyses permettent de conclure que la silice traitée comme décrit précédemment comporte 1,6 équilavents molaires de groupe de formule :

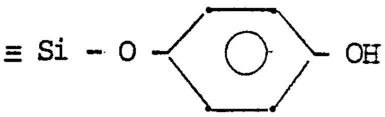

par nm2.

Le produit ainsi obtenu sera dénommé par la suite "silice A".

EXEMPLE 2

Cet exemple illustre le greffage de la p-aminodiphénylamine par l'intermédiaire du (chlorométhyl-4 phényl)-2 éthyldiméthyl- chlorosilane.

a) Greffage du (chlorométhyl-4 phényl)-2 éthyldiméthyl-chlorosilane.

On utilise la méthode décrite par A. VIDAL et al, Polym. Bull. 2 p. 315-320 (1980).

Dans un ballon en verre de 1 l à trois tubulures, équipé d'un système d'agitation, d'une arrivée de gaz inerte, d'un réfrigérant ascendant, d'une ampoule de coulée, d'un dispositif de chauffage, purgé à l'azote, on charge :

- 5 cm3 (0,020 mole de (chlorométhyl-4 phényl)-2 éthyldiméthyl-chlorosilane.
- 600 cm3 de n-heptane.
- 25 g de la silice utilisée à l'exemple 1 séchée préalablement à 120°C.

On porte le contenu du ballon à reflux sous agitation et maintient ces conditions pendant 6 heures. On refroidit ensuite à 20°C et laisse 12 h sous agitation. La masse réactionnelle est filtrée puis le gâteau essoré est soumis à une extraction à l'acétone pour éliminer le (chlorométhyl-4 phényl)-2 éthyldiméthylchlorosilane non fixé chimiquement. Pendant cette extraction on mesure périodiquement la teneur en chlore de la silice. Quand cette teneur devient constante on arrête l'extraction. La teneur en chlore du produit obtenu correspond alors à la présence de 0,6 molécule de silane par nm2. Le produit est séché et conservé sous vide.

b) Greffage de la p-aminodiphénylamine

Dans un ballon de 1 litre équipé comme précédemment on charge :

- 350 cm3 de ligroïne de point d'ébullition 60°C à pression normale ;
- 3,6 g de p-aminodiphénylamine ;
- 15 g de silice à groupes silanes précédemment obtenue.

On porte le contenu du ballon à la température d'ébullition de la ligroïne sous agitation et on maintient 7 heures dans ces conditions. On filtre la masse réactionnelle puis soumet la silice modifiée à une extraction pour éliminer la p-aminodiphénylamine non fixée chimiquement. L'extraction est arrêteé lorsque la teneur en azote de la silice, déterminée par la méthode de Kjeldahl devient constante ; le taux de greffage est alors de 0,4 molécule de p-aminodiphénylamine par nm2.

L'examen en spectrométrie IR par la méthode de la pastille de KBr de la silice modifiée par la p-aminodiphénylamine fait apparaître des bandes caractéristiques des deux types de molécules fixées :

(1) Silice à groupes silanes :

Elle présente :

. une bande intense à 1520 $cm^{-1}$ caractéristique de la présence de noyaux aromatiques ;

. une bande à environ 2900 $cm^{-1}$ attribuée aux groupes méthylène et méthyle ;

. une bande à 400 $cm^{-1}$ attribuée à la liaison carbone-chlore.

(2) Silice à groupes p-aminodiphénylamine :

Le spectre IR de ce produit présente une bande à 1520 $cm^{-1}$ plus intense que le produit intermédiaire ; des bandes à 1495 $cm^{-1}$ et 1300 $cm^{-1}$ caractéristiques des liaisons azote/hydrogène et carbone/azote respectivement ; la bande à 400 $cm^{-1}$ a disparu.

Ces analyses permettent de conclure que la silice traitée selon le mode opératoire décrit précédemment comporte 0,41 molécule de groupe de formule :

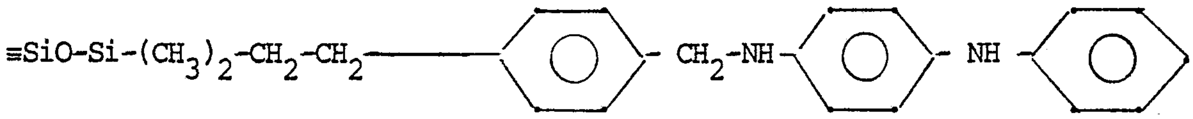

par nm2.

Ce produit sera désigné par la suite "silice B".

EXEMPLE 3

Cet exemple illustre le greffage de la p-aminodiphénylamine par l'intermédiaire du toluènediisocyanate.

a) Greffage du toluènediisocyanate

On a utilisé la méthode décrite dans le brevet américain No. 3 208 867.

Dans un ballon en verre de 500 $cm^3$ équipé comme à l'exemple 2 on charge :

- 250 cm3 de n-heptane ;
- 60 g de silice préalablement séchée à l'étuve à 120°C (soit 0,071 équivalent molaire de groupe silanol) ;

puis on ajoute goutte à goutte sous agitation 25 cm3 d'une solution à 3,5 moles par litre de toluènediisocyanate (mélange d'isomères -2,4 et 2,6 à 80/20 % en poids) dans le n-heptane (soit 0,087 mole de toluènediisocyanate). Le contenu du ballon est porté à reflux pendant 1 heure. La masse réactionnelle est filtrée et la silice est extraite par de l'hexane jusqu'à ce que la teneur en carbone et en azote demeure constante. Ces teneurs sont respectivement de 8,16 % et 2,12 %. Le taux de greffage est alors de 2,6 molécules de toluènediisocyanate par nm2.

b) Greffage de la p-aminodiphénylamine

Dans un ballon de 3 litres équipé comme précédemment et purgé à l'azote on charge :

- 2 litres de ligroïne de point d'ébullition 60°C à pression normale ;
- 40 g de silice modifiée obtenue précédemment (soit 0,031 équivalent molaire de toluènediisocyanate) ;
- 0,123 mole de p-aminodiphénylamine puis on porte à reflux pendant 8 heures sous agitation. On filtre la masse réactionnelle puis soumet la silice modifiée à une extraction par l'acétone jusqu'à teneur constante en azote (dosage par la méthode de Kjeldahl) puis par l'hexane jusqu'à teneur constante en azote. Les teneurs pondérales en azote et carbone du produit obtenu sont respectivement de 2,37 % et de 10,51 %.

Les taux de greffage exprimés en nombre d'équivalents molaires de toluènediisocyanate et en nombre d'équivalents molaires de p-aminodiphénylamine par gramme de produit obtenu s'élèvent respectivement à $4{,}74 \times 10^{-4}$ et $3{,}74 \times 10^{-4}$. Exprimés en nombre de molécules par nm2 les taux de greffage s'élèvent respectivement à 1,6 et 1,3.

La silice modifiée obtenue aux étapes a) et b) a été soumise à une analyse en spectrométrie IR.

Le spectre IR de la silice modifiée selon l'étape a) présente une bande d'absorption à 1670 $cm^{-1}$ caractéristique du groupe amide dans le groupe uréthanne, une bande à 2300 $cm^{-1}$ caractéristique du groupe -NCO et une bande à 1560 $cm^{-1}$ attribuée au noyau phényle.

Le spectre IR du produit obtenu à l'étape b) présente une bande intense à 1560 $cm^{-1}$ (noyau phényle), des bandes à 1700 $cm^{-1}$ et 1650 $cm^{-1}$ caractéristiques des restes carbonyles des groupes uréthanne et urée ; la bande à 2300 $cm^{-1}$ a disparu.

Ces analyses permettent de conclure que la silice traitée comme décrit précédemment comporte 1,3 groupes de formule :

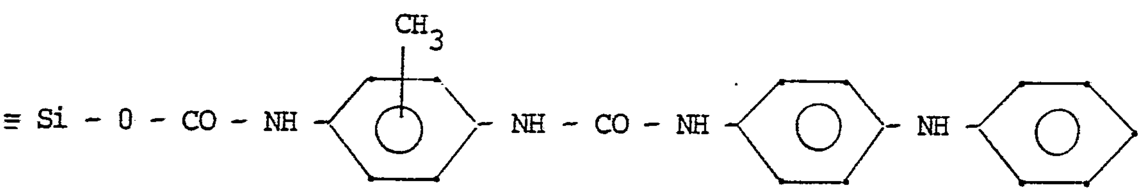

par $nm^2$.

Ce produit sera désigné par la suite "silice C".

EXEMPLE 4

Afin de vérifier les propriétés antioxydantes des silices A, B et C on a procédé à des mesures d'absorption de l'oxygène par des éprouvettes de caoutchouc les contenant. A titre comparatif on a procédé aux mêmes mesures sur des échantillons de caoutchouc contenant de la silice mais aucun agent antioxydant (formulation T) ou comme agent antioxydant le di-t-butyl-2,6 p-crésol (formulation T1).

Les échantillons nécessaires à la réalisation des mesures d'absorption d'oxygène ont été obtenus à partir d'un mélange maître ayant la composition suivante :

. caoutchouc naturel SMR-L 100 parties en poids
. oxyde de zinc 5 parties en poids
. acide stéarique 1 partie en poids
. soufre 2 parties en poids
. accélérateur de vulcanisation vendu sous la marque commerciale VULCAFOR CBS 1 partie en poids
. polyéthylèneglycol 1,3 parties en poids
. silice ZEOSIL 175 MP.

La quantité de silice varie en fonction de l'antioxydant utilisé et tient compte, le cas échéant, de la quantité de silice apportée par la charge stabilisante.

Les caoutchoucs vulcanisés obtenus après vulcanisation par chauffage à 153°C pendant des temps variables selon la nature de l'antioxydant seront désignés par les lettres T (pas d'antioxydant), $T_1$ (di-t-butyl-2,6 p-crésol), A, B et C.

Les quantités de silice pure et d'antioxydant et les durées de vulcanisation sont précisées dans le tableau 1 suivant :

Tableau 1

| CAOUTCHOUC | SILICE % en poids (1) | ANTIOXYDANT % en poids (1) | DUREE DE VULCANISATION en minutes |
|---|---|---|---|
| T | 20 | 0 | 21,5 |
| $T_1$ | 20 | 3,89 | 24,5 |
| A | 6,66 | 14,3 | 13,5 |
| B | 0 | 71,9 | 24 |
| C | 0 | 22,1 | 15 |

(1) pour 100 g du mélange maître.

Les quantités d'agent antioxydant introduites dans les caoutchoucs références A, B, C, exprimées en poids d'antioxydant libre pour 100 g de mélange maître sont de 3,9 % pour le caoutchouc A et 2 % pour les caoutchoucs B et C.

Les mélanges non vulcanisés contenant la silice et/ou les antioxydants sont vulcanisés dans une presse chauffée à 153°C, sous forme de feuilles de 0,4 mm d'épaisseur. Après vulcanisation on découpe à l'emporte-pièce dans les feuilles obtenues des disques de 28 mm de diamètre pesant 0,3 g. Pour vérifier le comportement vis-à-vis de l'oxygène des caoutchoucs T, $T_1$, A, B et C on place un disque échantillon dans une nacelle en quartz reliée au fléau d'une micro-balance PERKIN ELMER TGS 2 et placée dans une enceinte thermostatée à 100°C purgée à l'azote. On maintient les échantillons à 100°C sous azote jusqu'à poids constant puis on balaie l'enceinte par un courant d'oxygène anhydre. La microbalance est reliée à un enregistreur permettant de tracer la courbe de variation de la masse de l'échantillon en fonction de la durée d'exposition à l'oxygène. Les courbes obtenues pour les caoutchoucs T, $T_1$, A, B et C sont représentées sur la figure annexée.

La comparaison des courbes A, B et C avec la courbe T fait apparaître l'action stabilisante des silices A, B et C. La comparaison des courbes A, B et C avec la courbe $T_1$, montre que les silices A, B et C ont un action stabilisante équivalente ou supérieure à celle du di-butyl-2,6 p-crésol.

Afin de vérifier la permanence de l'antioxydant sous l'effet de la température, on a porté des disques échantillons à 100°C pendant 24 h en balayant l'enceinte à l'azote on a constaté que tous les échantillons, y compris le témoin T ne contenant aucun antioxydant, présentent une perte de poids. Cependant les échantillons A, B et C ont subi une perte de poids égale à celle du témoin T et qui n'est donc pas due à la perte de l'antioxydant alors que le témoin $T_1$ a subi une perte de poids très supérieure à celle de T, A, B et C et qui est imputable à la volatilisation du ditertiobutyl p-crésol. Les pertes de poids ont été de 0,8 % pour les échantillons T, A, B et C et de 2,5 % pour l'échantillon $T_1$.

EXEMPLE 5

On a procédé sur les caoutchouc T, $T_1$ et A à la mesure des propriétés dynamométriques sur des éprouvettes $H_2$ conformément à la norme AFNOR T 46.002 :

a) avant vieillissement thermique (tableau 2) ;

b) après vieillissement thermique en étuve multicellulaire selon la norme AFNOR T 46.004 :

b') avant lavage des éprouvettes à l'eau (tableau 2)

b") après lavage des éprouvettes à l'eau courante pendant 15 jours (tableau 3).

On a obtenu les résultats consignés dans les tableaux suivants :

Tableau 2

| ECHANTILLONS | PROPRIETES DYNAMOMETRIQUES | | | | | | | PROPRIETES RESIDUELLES | |
|---|---|---|---|---|---|---|---|---|---|
| | Vieillissement 80°C | Résistance rupture (MPa) | Modules (MPa) à | | | Allongement % | Dureté shore A2 | Résistance rupture % | Allongement % |
| | | | 300 % | 500 % | 700 % | | | | |
| T | 0 jour | 28,3 | 2,7 | 6,5 | 14,3 | 915 | 50 | 100 | 100 |
| | 3 jours | 25,9 | 3,1 | 7,5 | 16,1 | 855 | 50 | 92 | 93 |
| | 5 jours | 24,5 | 3,1 | 7,8 | 16,7 | 835 | 50 | 87 | 91 |
| | 13 jours | 14,1 | 2,7 | 7 | - | 695 | 46 | 50 | 76 |
| | 20 jours | 5,4 | 2,6 | - | - | 450 | 43 | 19 | 49 |
| $T_1$ | 0 jour | 28,1 | 2,6 | 6,1 | 13,6 | 925 | 49 | 100 | 100 |
| | 3 jours | 28,8 | 2,9 | 7,1 | 15,6 | 900 | 50 | 102 | 97 |
| | 5 jours | 26,9 | 3,1 | 7,6 | 16,7 | 855 | 51 | 96 | 92 |
| | 13 jours | 19,5 | 3,3 | 8,2 | 16,9 | 750 | 50 | 69 | 81 |
| | 20 jours | 15,1 | 3,4 | 8,7 | - | 660 | 48 | 54 | 71 |
| A | 0 jour | 28,6 | 3,1 | 7,7 | 16,6 | 875 | 52 | 100 | 100 |
| | 3 jours | 32,4 | 4,3 | 10,7 | 22,6 | 835 | 55 | 113 | 95 |
| | 5 jours | 32,2 | 4,7 | 11,7 | 24 | 815 | 57 | 112 | 93 |
| | 13 jours | 26 | 4,9 | 12 | 23,5 | 740 | 55 | 91 | 85 |
| | 20 jours | 21,9 | 5,1 | 12,5 | - | 680 | 55 | 77 | 78 |

Tableau 3

| ECHANTILLONS | PROPRIETES DYNAMOMETRIQUES | | | | | | | PROPRIETES RESIDUELLES | |
|---|---|---|---|---|---|---|---|---|---|
| | Vieillissement 80°C | Résistance rupture (MPa) | Modules (MPa) à 300 % | Modules (MPa) à 500 % | Modules (MPa) à 700 % | Allongement % | Dureté shore A2 | Résistance rupture % | Allongement % |
| T | 3 jours | 23 | 2,9 | 7,6 | 16,6 | 805 | 50 | 81 | 88 |
| | 5 jours | 23,5 | 3,4 | 8,9 | 19,3 | 775 | 50 | 83 | 85 |
| | 13 jours | 14,3 | 2,9 | 7,8 | - | 670 | 50 | 51 | 73 |
| | 20 jours | 9,1 | 2,9 | 7,4 | - | 565 | 46 | 32 | 62 |
| $T_1$ | 3 jours | 25,9 | 2,9 | 7,5 | 17 | 835 | 50 | 92 | 90 |
| | 5 jours | 24 | 3,2 | 8,1 | 17,9 | 805 | 51 | 85 | 87 |
| | 13 jours | 18,7 | 3,4 | 8,7 | 18,2 | 715 | 51 | 67 | 77 |
| | 20 jours | 13,5 | 3,2 | 8,2 | - | 640 | 49 | 48 | 69 |
| A | 3 jours | 27,4 | 4,3 | 10,9 | 23,1 | 760 | 55 | 96 | 87 |
| | 5 jours | 27,4 | 4,7 | 12 | 24,6 | 750 | 56 | 96 | 86 |
| | 13 jours | 21,4 | 4,7 | 11,7 | - | 680 | 56 | 75 | 78 |
| | 20 jours | 17 | 4,8 | 11,8 | - | 610 | 55 | 59 | 70 |

Le tableau 2 fait ressortir le caractère antioxydant de la silice A et confirme que son efficacité est voisine de celle du di-t-butyl-2,6 p-crésol.

La comparaison des tableaux 2 et 3 montre la permanence des propriétés antioxydantes de la silice A après un lavage à l'eau de 15 jours alors que le caoutchouc stabilisé par le di-t-butyl-2,6 p-crésol résiste moins bien au vieillissement après un lavage à l'eau de 15 jours en raison de l'élimination partielle de l'antioxydant.

EXEMPLE 6

On a répété les tests de détermination des propriétés antioxydantes des silices A et C en opérant comme à l'exemple 5 mais en conduisant le vieillissement à 100° C au lieu de 80° C. On a obtenu les résultats consignés dans le tableau 4 :

Tableau 4

| ECHANTILLONS | PROPRIETES DYNAMOMETRIQUES | | | | | | | PROPRIETES RESIDUELLES | |
|---|---|---|---|---|---|---|---|---|---|
| | Vieillissement 100°C | Résistance rupture (MPa) | Modules (MPa) à | | | Allongement % | Dureté shore A2 | Résistance rupture % | Allongement % |
| | | | 300 % | 500 % | 700 % | | | | |
| T | 0 jour | 28,3 | 2,7 | 6,5 | 14,3 | 915 | 50 | 100 | 100 |
| | 1 jour | 16 | 2,5 | 6,2 | 12,8 | 780 | 48 | 57 | 85 |
| | 2 jours | 5,7 | 2 | 4,7 | - | 565 | 42 | 20 | 62 |
| | 3 jours | 2,1 | 1,6 | - | - | 370 | 40 | 7 | 40 |
| | 4 jours | 1,1 | - | - | - | 140 | 38 | 4 | 15 |
| $T_1$ | 0 jour | 28,1 | 2,6 | 6,1 | 13,6 | 925 | 49 | 100 | 100 |
| | 1 jour | 22,2 | 2,8 | 7,2 | 15,3 | 835 | 50 | 79 | 90 |
| | 2 jours | 10,4 | 2,5 | 6,2 | - | 640 | 46 | 37 | 69 |
| | 3 jours | 4,7 | 2 | 4,7 | - | 510 | 40 | 17 | 55 |
| | 4 jours | 2,1 | - | - | - | 310 | 37 | 7 | 34 |
| A | 0 jour | 28,6 | 3,1 | 7,7 | 16,6 | 875 | 52 | 100 | 100 |
| | 1 jour | 26,7 | 4,2 | 10,3 | 20,9 | 805 | 55 | 93 | 92 |
| | 2 jours | 21,4 | 4,2 | 10,2 | 19,9 | 740 | 54 | 75 | 85 |
| | 3 jours | 11,3 | 3,9 | 9,4 | - | 555 | 50 | 40 | 63 |
| | 4 jours | 8,5 | 3,8 | - | - | 490 | 48 | 30 | 56 |
| C | 0 jour | 26,3 | 3,2 | 7,8 | 16,8 | 845 | 52 | 100 | 100 |
| | 1 jour | 22,3 | 4 | 9,8 | 19,9 | 750 | 52 | 85 | 89 |
| | 2 jours | 16,5 | 4,1 | 9,7 | - | 660 | 51 | 63 | 78 |
| | 3 jours | 13,4 | 3,9 | 9,2 | - | 620 | 49 | 51 | 73 |
| | 4 jours | 9,2 | 3,8 | 9 | - | 510 | 47 | 35 | 60 |

Ces résultats confirment les propriétés antioxydantes des silices A et C.

EXEMPLE 7

Afin de vérifier le comportement à la migration des produits selon l'invention, on a préparé divers échantillons de caoutchoucs vulcanisés à l'aide de silices stabilisantes selon l'invention et à l'aide d'antioxydants usuels : d'une part la N-isopropyl p-phénylènediamine (IPPD) et d'autre part l'hydroquinone (HQ), introduits dans le mélange maître suivant :

- caoutchouc naturel (marque commerciale SMRL) 100 g
- oxyde de zinc 5 g
- acide stéarique 1 g
- oxyde de titane 20 g
- kaolin calciné (marque commerciale WHITTETEX No. 2) 15 g
- polyéthylèneglycol (marque commerciale EMKAPOL 4000) 1,3 g
- soufre 2 g
- accélérateur de vulcanisation (marque commerciale VULCAFOR CBS) 1 g
- silice en quantité suffisante pour : 20 g.

Dans ce mélange maître on a introduit des quantités variables de stabilisants dont la nature est précisée dans le tableau ci-après.

| MELANGES-MAITRES | STABILISANTS | |
|---|---|---|
| | Nature | Quantité en g |
| $T_2$ | Aucun | |
| $T_3$ | IPPD | 2 g |
| $T_4$ | HQ | 2 g |
| D | Si/HQ (1) | 22,72 g |
| E | Si/ADPA (2) | 14,3 g |

(1) silice greffée à l'hydroquinone obtenue selon un procédé analogue à celui décrit à l'exemple 1 et contenant 8,8 % en poids d'hydroquinone.

(2) silice greffée à la p-aminodiphénylamine par l'intermédiaire du toluènediisocyanate et contenant 11,4 % en poids de p-aminodiphénylamine.

Les mélanges $T_2$, $T_3$, $T_4$, D et E ont été vulcanisés à l'optimum de vulcanisation à 153°C selon le procédé décrit à l'exemple 4. Après vulcanisation on a découpé dans chacune des feuilles de caoutchoucs obtenues des morceaux de 3 x 3 cm. Chaque échantillon a été placé sur une plaque métallique peinte à l'aide d'une peinture glycérophtalique blanche. On a appliqué sur chaque échantillon une pression de 0,06 MPa et on a maintenu dans ces conditions les plaques portant les échantillons pendant 48 heures dans une étuve portée à 80°C.

Après avoir procédé à l'enlèvement des échantillons, on a observé la coloration des plaques métalliques. Les résultats ont été les suivants :

| Echantillons | Coloration de la plaque |
|---|---|
| $T_2$ | blanche |
| $T_3$ | faiblement jaune |
| $T_4$ | jaune très foncé |
| D | très faiblement jaune |
| E | faiblement jaune |

EXEMPLE 8

On a procédé à la stabilisation d'un caoutchouc styrène/butadiène à l'aide d'une silice greffée préparée selon un procédé analogue à l'exemple 1 et on a comparé son effet stabilisant à celui du ditertiobutyl p-crésol. Pour cela on a introduit une quantité adéquate de stabilisant dans le mélange maître suivant :

- caoutchouc styrène/butadiène (marque commerciale SBR 1502) 100 g
- ZnO 5 g
- acide stéarique 2 g
- silice 35 g
- polyéthylèneglycol 2 g
- soufre 2 g
- accélérateur de vulcanisation (marque commerciale VULCAFOR TMTM) 0,5 g
- accélérateur de vulcanisation (marque commerciale VULCAFOR DOTG) 0,5 g
- antioxydant 1 g

Comme antioxydant selon l'invention on a utilisé une silice greffée à l'hydroquinone contenant 2,8 % en poids d'hydroquinone ; dans ce cas la quantité de silice introduite par la quantité de charge stabilisante correspondant à 1 g d'hydroquinone s'élevant à 34,7 g il n'a pas été nécessaire d'introduire de la silice non greffée. A titre comparatif on a préparé un caoutchouc vulcanisé ne contenant aucun stabilisant. Les trois mélanges-maîtres $T_5$ (aucun antioxydant), $T_6$ (ditertiobutyl p-crésol) et F (silice greffée) ont été vulcanisés à 153° C selon le procédé décrit aux exemples précédents. Les durées de vulcanisation ont été respectivement de 9,5 mn ($T_5$) ; 10,2 mn ($T_6$) et 13,6 mn (F).

Pour évaluer la stabilité des caoutchouc $T_5$, $T_6$ et F on a procédé à la mesure des propriétés dynamométriques de ces caoutchoucs sur des éprouvettes $H_2$ conformément à la norme AFNOR T 46002, avant vieillissement thermique et après vieillissement thermique à 120° C en étuve multicellulaire selon la norme AFNOR T 46004. On a obtenu les résultats consignés dans le tableau suivant :

| caoutchoucs | Résistance rupture Initiale en MPa | Résistance rupture Résiduelle Après 1 jour % | Résistance rupture Résiduelle Aprés 3 jours % | Allongement rupture % Initial | Allongement rupture % Résiduel Après 1 jour % | Allongement rupture % Résiduel Après 3 jours % |
|---|---|---|---|---|---|---|
| $T_5$ | 18,1 | 24 | Résinifié non mesurable | 695 | 8 | Résinifié non mesurable |
| $T_6$ | 20,7 | 26 | 8 | 735 | 10 | 3 |
| F | 20,4 | 29 | 25 | 640 | 19 | 10 |

**Revendications**

1°) Procédé de stabilisation de polymères à l'aide de stabilisants résistant à l'élimination et/ou à la migration, caractérisé en ce qu'on incorpore auxdits polymères une quantité efficace d'un stabilisant lié chimiquement à une charge siliceuse par l'intermédiaire d'un reste $=Si-O-$.

2°) Procédé selon la revendication 1, caractérisé en ce que le polymère stabilisé est un caoutchouc naturel ou synthétique.

3°) Procédé de stabilisation selon les revendications 1 à 2, caractérisé en ce que l'on introduit dans le polymère une quantité efficace d'une charge siliceuse comportant à sa surface une pluralité de restes stabilisants de formule générale :

$\equiv Si - O - X - [A - Y]_n - Z$ (I)

dans laquelle :

- X représente un lien valentiel ou un reste fonctionnel ;
- Y représente un reste fonctionnel identique ou différent de X ;
- A représente un reste hydrocarboné divalent ;
- Z représente un reste d'un composé organique stabilisant ;
- n est 0 ou 1.

4°) Procédé selon la revendication 3, caractérisé en ce que l'on utilise une charge stabilisante comportant à sa surface une pluralité de restes stabilisants de formule générale (I) dans laquelle :

. X représente un lien valentiel ou les restes

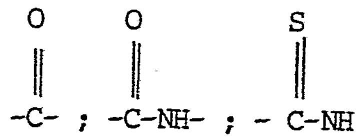 ; -Si(R'R")- dans lequel R' et R", identiques ou différents représentent un radical alkyle inférieur ou un radical aryle, alkylaryle, arylalkyle, cycloalkyle.

. Y représente un reste fonctionnel de l'ensemble formé par :
-O- ; -COO- ; -CO-NH- ; -NH-COO- ; -NH-CSO- ; -CO- ; -S- ; -NH-.

. A représente :
- un reste alkylène ayant de 1 à 30 atomes de carbone, linéaire ou ramifié ;
- un reste cycloalkylène ayant de 5 à 12 atomes de carbone éventuellement substitué par des radicaux alkyles inférieurs ;
- un reste arylène éventuellement substitué par des radicaux alkyles inférieurs ;
- un reste hydrocarboné divalent constitué par une combinaison d'un ou plusieurs radicaux alkylènes tels que ceux précédemment définis avec un ou plusieurs radicaux cycloalkylènes et/ou arylènes tels que précédemment définis, ce reste hydrocarboné divalent comportant de 6 à 40 atomes de carbone.

. Z représente le reste d'une molécule d'un antioxydant phénolique ou aminoaromatique.

5°) Procédé selon la revendication 4, caractérisé en ce que l'on utilise une charge stabilisante comportant à sa surface une pluralité de restes stabilisants de formule (I) dans laquelle Z représente un reste antioxydant de formules générales :

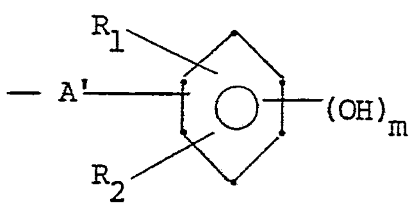 (II)

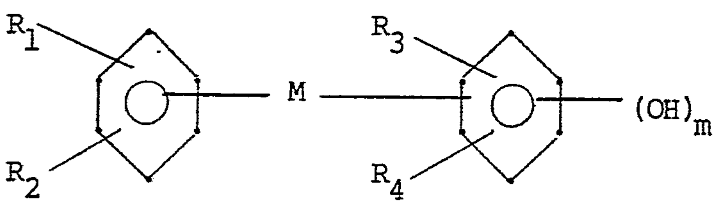 (III)

dans lesquelles :
- $R_1$, $R_2$, $R_3$, $R_4$, identiques ou différents représentent des atomes d'hydrogène ou des radicaux alkyles linéaires ou ramifiés ayant de 1 à 10 atomes de carbone, et de préférence des radicaux alkyles ramifiés ayant de 1 à 5 atomes de carbone ;
- A' représente un lien valentiel ou un radical alkylène ayant de 1 à 10 atomes de carbone et de préférence de 1 à 2 atomes de carbone.
- M représente un lien valentiel ou un reste alkylène inférieur, un atome d'oxygène, de soufre ; un reste -NH-, -CO-, $-SO_2-$ ;
- m est 0, 1 ou 2 mais au moins égal à 1 lorsque M ne représente pas un reste -NH-.

6°) Procédé selon l'une quelconques des revendications 1 à 5, caractérisé en ce que l'on incorpore au polymère une quantité efficace d'une charge siliceuse antioxydante comportant à sa surface une pluralité de restes antioxydants de formule :

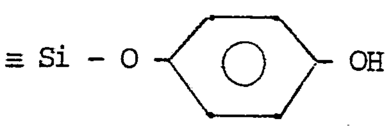

7°) Procédé selon l'une quelconques des revendications 1 à 5, caractérisé en ce que l'on incorpore au polymère une quantité efficace d'une charge siliceuse antioxydante comportant à sa surface une pluralité de restes antioxydants de formule :

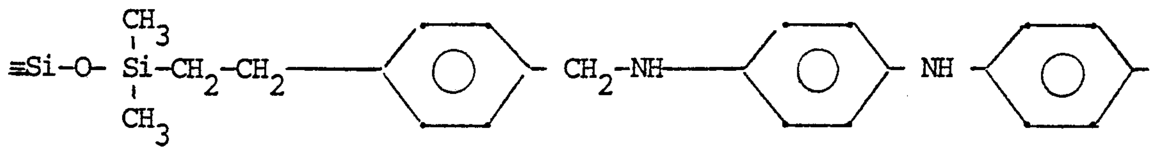

8°) Procédé selon l'une quelconques des revendications 1 à 5, caractérisé en ce que l'on incorpore au polymère une quantité efficace d'une charge siliceuse antioxydante comportant à sa surface une pluralité de restes antioxydants de formule :

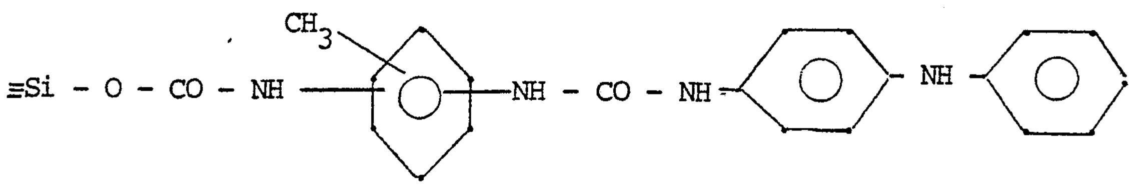

9°) Procédé selon l'une quelconque des revendications 1 à 8, caractérisé en ce que le constituant siliceux de la charge stabilisante est une silice de précipitation ayant une surface spécifique supérieure ou égale à 25 m2/g.

10°) Nouvelle charge stabilisante pour polymères, caractérisée en ce qu'elle est constituée d'un support siliceux particulaire comportant à sa surface une pluralité de restes stabilisants de formule :

$\equiv Si - O - X \pm A - Y \pm_n - Z$ (I)

dans laquelle X, A, Y, n et Z ont les significations déjà données aux revendications 3 à 5.

11°) Nouvelle charge stabilisante pour polymères selon la revendication 10, caractérisée en ce que dans la formule I :

- X représente un lien valentiel, un reste -Si(R'R"), un reste fonctionnel -NH-CO- ;
- Y représente un reste fonctionnel -O- ; -COO- ; -NH- ; -NH-COO- ; -CONH-;
- A représente un reste alkylène, un reste arylène, un reste alkylphénylène, un reste divalent constitué par une combinaison d'un ou plusieurs groupes méthylène avec un ou plusieurs groupes arylène ;
- n est 0 ou 1 ;
- Z représente des restes antioxydants de formule générale :

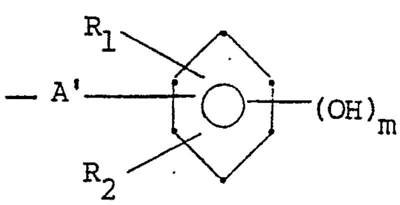

(II)

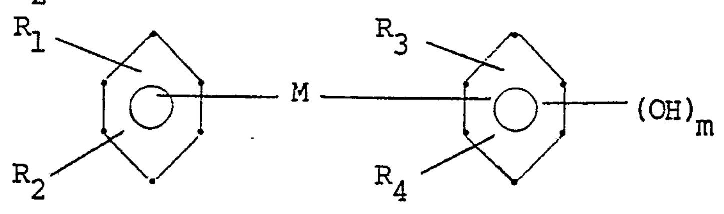

(III)

R', R", A', $R_1$, $R_2$, $R_3$, $R_4$ et m ayant la signification donnée précédemment avec la restriction que dans la formule (II) l'un au moins des radicaux $R_1$, $R_2$ représente un radical alkyle lorsque dans la formule (I) X représente un lien valentiel et n est zéro.

12°) Nouvelle charge antioxydante pour polymères selon la revendication 10, caractérisée en ce qu'elle est constituée d'une silice de précipitation ayant une surface spécifique supérieure à 25 m2/g comportant à sa surface une pluralité de restes antioxydants de formule :

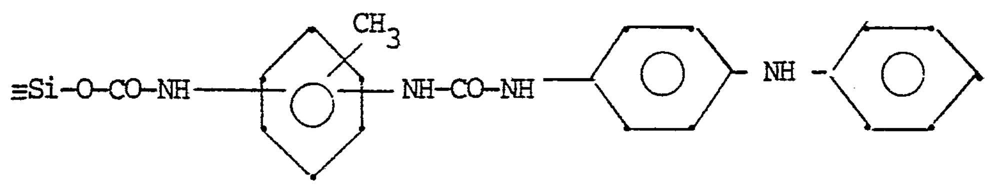

13°) Nouvelle charge antioxydante pour polymères selon la revendication 10, caractérisée en ce qu'elle est constituée d'une silice de précipitation ayant une surface spécifique supérieure à 25 m2/g comportant à sa surface une pluralité de restes antioxydants de formule :

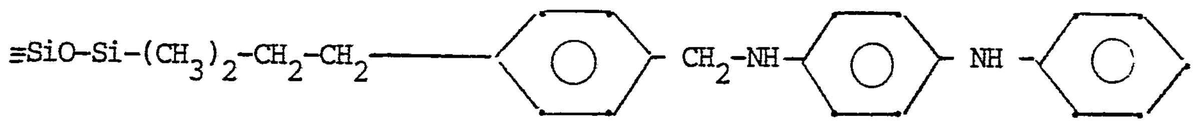

14°) Procédé de préparation de charges siliceuses stabilisantes pour polymères présentant une pluralité de restes stabilisants de formule (I) dans laquelle n est égal à 1 et X, Y, A et Z ont la signification donnée à l'une quelconque des revendications 1 à 5, caractérisé en ce que l'on fait réagir dans une première étape un support siliceux comportant une pluralité de groupes =Si-OH avec un agent de couplage de formule générale :

X' - A - Y' (IV)

dans laquelle A a la signfication donnée à l'une quelconque des revendications 1 à 6, X' représente un groupe fonctionnel susceptible de réagir avec les groupes silanols pour former un matériau siliceux comportant à sa surface une pluralité de restes de formule :

≡ Si - O - X - A - Y'

puis que l'on fait réagir, dans une seconde étape, ledit matériau siliceux modifié avec un stabilisant organique de formule générale :

Z - Y'' (V)

dans laquelle z a la signification donnée précédemment et Y'' est un groupe fonctionnel Y''' susceptible de réagir avec le groupe fonctionnel Y'.

15°) Procédé selon la revendication 14, caractérisé en ce que dans la formule (IV) :

. X' représente un groupe hydroxyle, isocyanate, halogénosilyle ;

. Y' un atome d'halogène, un groupe isocyanate, un groupe $-NH_2$.

16°) Procédé de préparation de charges siliceuses stabilisantes pour polymères présentants une pluralité de restes stabilisants de formule (I) dans laquelle n est égal à 0 et X, Y et Z ont la signification déjà donnée aux revendications 1 à 5, caractérisé en ce que l'on fait réagir un support siliceux comportant une pluralité de groupes silanols avec un stabilisant de formule :

Z - Y'' (V)

dans laquelle Z a la signification déjà donnée et Y'' représente un groupe fonctionnelle X' susceptible de réagir avec les groupes silanols.

17°) Procédé selon la revendication 16, caractérisé en ce que le stabilisant répond à la formule (V) dans laquelle Y'' représente un groupe hydroxyle.

18°) Compositions polymériques stabilisées, caractérisées en ce qu'elles sont constituées d'un polymère contenant une quantité efficace d'une charge siliceuse stabilisante selon l'une quelconque des revendications 1 à 8.

19°) Compositions polymériques stabilisées vis-à-vis de la dégradation par l'oxygène, caractérisées en ce qu'elles sont constituées par un caoutchouc naturel ou synthétique contenant une quantité efficace d'une charge siliceuse antioxydante comportant à sa surface une pluralité de restes antioxydants de formule (I) dans laquelle :

. X représente un lien valentiel ou les restes

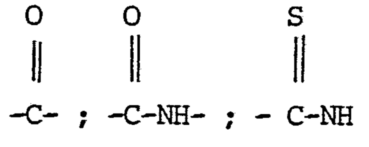 ; -Si(R'R")- dans lequel R' et R", identiques ou différents représentent un radical alkyle inférieur ou un radical aryle, alkylaryle, arylalkyle, cycloalkyle.

. Y représente un reste fonctionnel de l'ensemble formé par :

-O- ; -COO- ; -CO-NH- ; -NH-COO- ; -NH-CSO- ; -CO- ; -S- ; -NH-.

. A représente :
- un reste alkylène ayant de 1 à 30 atomes de carbone, linéaire ou ramifié ;
- un reste cycloalkylène ayant de 5 à 12 atomes de carbone éventuellement substitué par des radicaux alkyles inférieurs ;
- un reste arylène éventuellement substitué par des radicaux alkyles inférieurs ;
- un reste hydrocarboné divalent constitué par une combinaison d'un ou plusieurs radicaux alkylènes tels que ceux précédemment définis avec un ou plusieurs radicaux cycloalkylènes et/ou arylènes tels que précédemment définis, ce reste hydrocarboné divalent comportant de 6 à 40 atomes de carbone et de préférence de 6 à 15 atomes de carbone.
. Z représente le reste d'une molécule d'un antioxydant phénolique ou aminoaromatique.

20°) Compositions polymériques selon la revendication 19, caractérisées en ce que la charge siliceuse antioxydante comporte à sa surface une pluralité de restes antioxydants de formule (I) dans laquelle Z représente un reste antioxydant de formules générales :

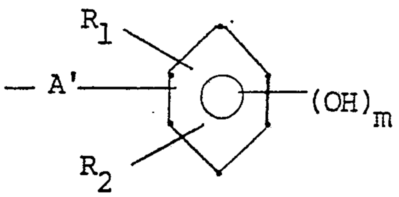

(II)

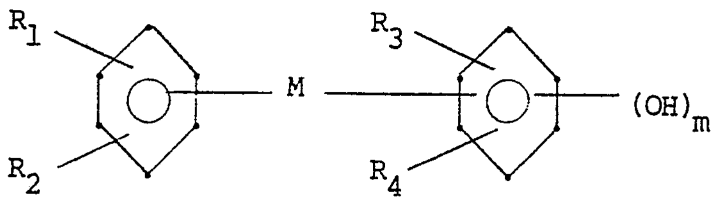

(III)

dans lesquelles :
-$R_1$, $R_2$, $R_3$, $R_4$, identiques ou différents représentent des atomes d'hydrogène ou des radicaux alkyles linéaires ou ramifiés ayant de 1 à 10 atomes de carbone, et de préférence des radicaux alkyles ramifiés ayant de 1 à 5 atomes de carbone ;
- A′ représente un lien valentiel ou un radical alkylène ayant de 1 à 10 atomes de carbone et de préférence de 1 à 2 atomes de carbone.
- M représente un lien valentiel ou un reste alkylène inférieur, un atome d'oxygène, de soufre ; un reste -NH-, -CO-, $-SO_2-$ ;
- m est 0, 1 ou 2 mais au moins égal à 1 lorsque M ne représente pas un reste -NH-.

21°) Compositions stabilisées selon la revendication 19, caractérisées en ce qu'elles sont constituées par un caoutchouc naturel ou synthétique contenant une quantité efficace d'une silice de précipitation de surface spécifique supérieure à 25 m2/g comportant à sa surface une pluralité de restes stabilisants de formule :

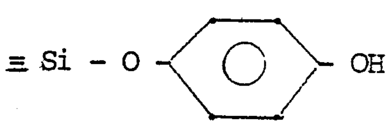

22°) Compositions stabilisées selon la revendication 19, caractérisées en ce qu'elles sont constituées par un caoutchouc naturel ou synthétique contenant une quantité efficace d'une silice de précipitation de surface spécifique supérieure à 25 m2/g comportant à sa surface une pluralité de restes stabilisants de formule :

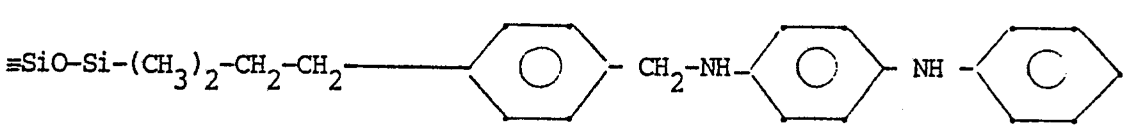

23°) Compositions stabilisées selon la revendication 19, caractérisées en ce qu'elles sont constituées

par un caoutchouc naturel ou synthétique contenant une quantité efficace d'une silice de précipitation de surface spécifique supérieure à 25 m2/g comportant à sa surface une pluralité de restes stabilisants de formule :

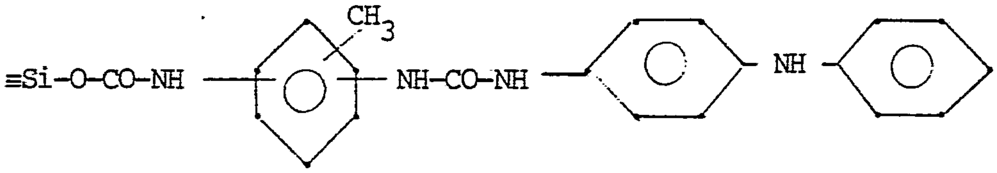

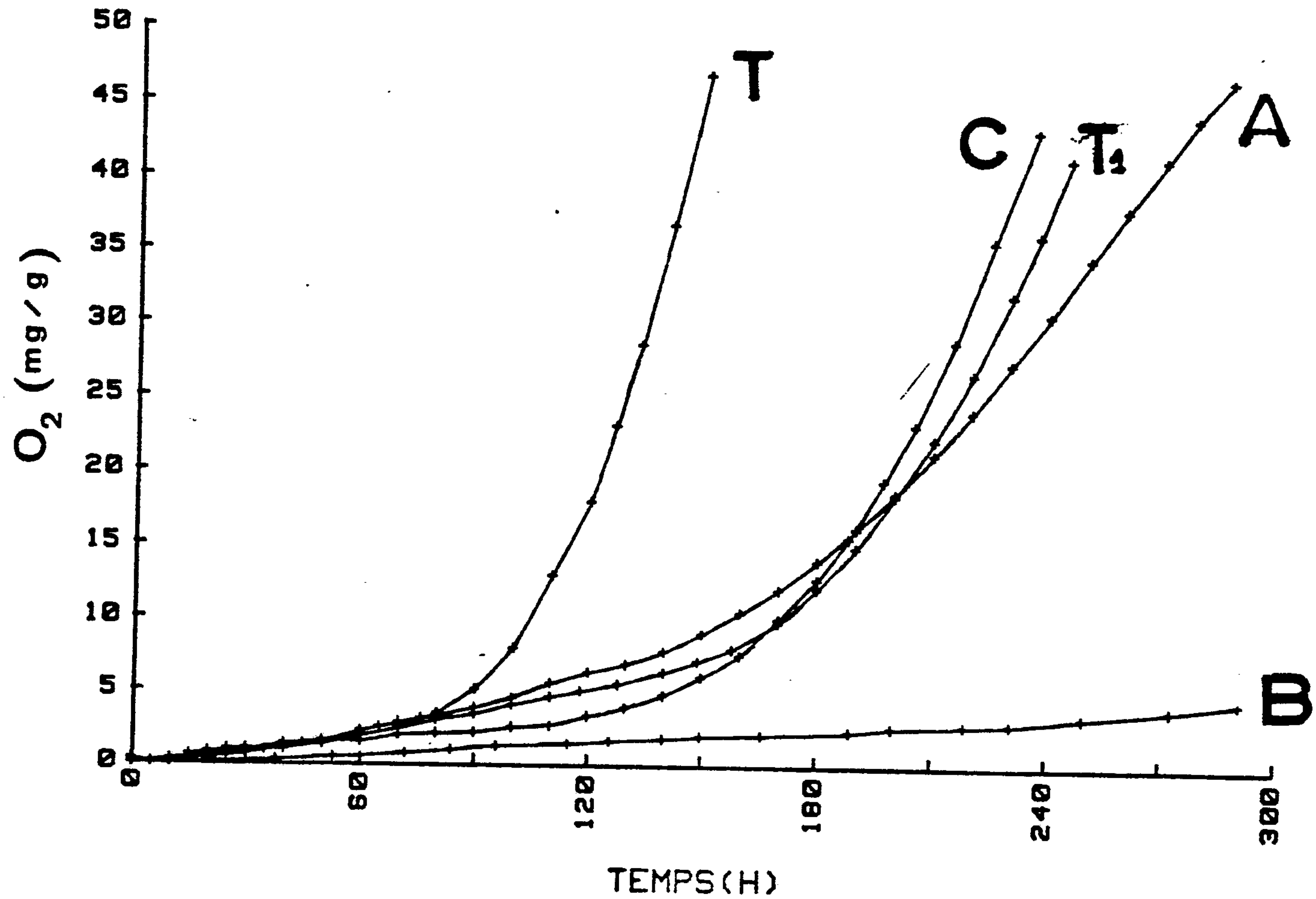

T
C
T1
A
B
O2 (mg/g)
50
45
40
35
30
25
20
15
10
5
0
0
60
120
180
240
300
TEMPS(H)

Office européen des brevets

# RAPPORT DE RECHERCHE EUROPEENNE

Numéro de la demande

EP 87 42 0051

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CHEMICAL ABSTRACTS, vol. 85, no. 18, 1 novembre 1976, page 54, résumé no. 125119g, Columbus, Ohio, US; & SU-A-518 511 (RUVINSKAYA et al.) 25-06-1976 | 1-3,9-10,16,18,19 | C 08 K 9/04 |
| X | EP-A-0 131 191 (GEORGIA KAOLIN CORP.) * Revendication 1 * | 1-3,10,14,18,19 | |
| A | US-A-3 177 165 (R.E. MORRIS et al.) * Revendication 1 * | | |
| A | US-A-3 177 166 (J.T. GREGORY et al.) * Revendication 1 * | | |
| A | FR-A-1 064 443 (DEGUSSA) * Résumé * | | |
| A | US-A-3 323 932 (P. ABOYTES et al.) * Revendication 1 * | | |

DOMAINES TECHNIQUES RECHERCHES (Int. Cl.4)

C 08 K
C 08 L

Le présent rapport de recherche a été établi pour toutes les revendications

| Lieu de la recherche | Date d'achèvement de la recherche | Examinateur |
|---|---|---|
| LA HAYE | 03-07-1987 | VAN HUMBEECK F.W.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant